# EUROPEAN PATENT APPLICATION

(11) **EP 0 810 023 A1**
(43) Date of publication of application: **03.12.1997**
(21) Application number: 96902465.2
(22) Date of filing: 16.02.1996
(51) Int. Cl.: B01D 53/74, B01D 53/02, B01D 53/26, F04D 29/38

(54) **BLOWER**

(30) Priority: 17.02.1995 JP 29448/95
(71) Applicant: KOMATSU LTD., Minato-ku Tokyo 107 (JP)
(72) Inventor: IMAMURA, Toshihide, Hiratsuka-shi, Kanagawa-ken 254 (JP)
(74) Representative: Enskat, Michael Antony Frank
(86) International application number: JP9600351
(87) International publication number: WO9625221

(57) **Abstract**

A blower of multi-blade structure having a plurality of blades is characterized in that a sheet-shaped member composed of a fiber material and imparted with at least one of dehumidifying, absorbing and oxidizing/decomposing functions is secured to at least one side of inner peripheral side and outer peripheral side of a blade wheel so as to close a respective interval space between adjacent blades of the blade wheel.

## Description

### TECHNICAL FIELD

The present invention relates to a blower and, more particularly, to a blower which is capable of blowing air while adsorbing a moisture contained in the air, or oxidizing or decomposing polar substances and organic substances such as odor contained in the air.

### BACKGROUND ART

As a conventional blower of this type, for example, it has been generally employed a blower system comprising a fan such as scirocco fan, turbofan, cross-flow fan or the like, in which such as dehumidifier, deodorant, dust removing filter or the like is interposed on the way of a route of a blowing path of the fan.

Further, Japanese Patent Laid-Open Publication No. HEI 5-23531 discloses a blower in which catalyst is fixed or adhered on a surface of a plurality of discs so as to mainly provide a deodorizing function. The blower of this type is well known as a multi-disc laminated type blower.

Among the conventional blowers described above, in a case of the blower where an interposition such as dehumidifier, deodorant, dust removing filter or the like is interposed on the way of the route of the blowing path, a blower having only air blowing function is used. In this regard, it is necessarily required to employ a blower having a higher delivery pressure compensating for a pressure loss due to the interposition interposed on the blowing path, so that a scale of the blower system will disadvantageously become large.

Further, as another example of the interposition, a honeycomb type or a packed tower type interposition has been also employed. However, since these interpositions are used as a component of the blower system, the existence of such interpositions constitutes a reason for inhibiting the entire blower system from being constructed in a compact scale.

On the other hand, the blower system disclosed in Japanese Patent Laid-Open Publication No. HEI 5-23531 has a sufficient air blowing function. However, the blower system has a problem of having a small blowing capacity.

An object of the present invention is to provide a blower which is capable of obtaining a sufficient blowing capacity equal or more of that of an ordinal multi-blade type blower, reducing the pressure loss in comparison with that of the conventional blower having the interposition such as dust removing filter or the like interposed within the blowing path, being compactly constructed in scale, and having an excellent function of dehumidifying or deodorizing the blowing air.

### DISCLOSURE OF THE INVENTION

In order to achieve the afore-mentioned object, in a first aspect of a blower according to the present invention, there is provided a blower of multi-blade structure having a plurality of blades which is characterized in that a sheet-shaped member composed of a fiber material and imparted with at least one of dehumidifying, absorbing and oxidizing/decomposing functions is secured to at least one side of inner peripheral side and outer peripheral side of a blade wheel so as to close a respective interval space between adjacent blades of the blade wheel.

In the above structure, the sheet-shaped member is formed of at least one fiber selected from inorganic fibers and metal fibers such as activated carbon fiber, glass fiber, alumina fiber, silica-alumina fiber, aluminium fiber, copper fiber, iron fiber, nickel fiber, stainless steel fiber, nichrome fiber, or kanthal fiber, or combination thereof to thereby provide a sheet-shaped body having a surface on which a moisture absorbent such as silica gel, silica-alumina gel, or alumina gel is reaction-produced.

Furthermore, in the above structure, the surface of the sheet-shaped member is treated with oxidizing/decomposing agent such as copper, nickel, iron, chrome, platinum, palladium, or rhodium for further imparting a function for oxidizing/decomposing a polar substance and an organic substance.

In the second aspect of the present invention, there is also provided a blower of multi-blade structure having a plurality of blades which is characterized in that a bundle of hollow yarns each composed of inorganic fibers, to which at least one of dehumidifying, absorbing and oxidizing/decomposing functions is imparted, is packed in a respective interval space between adjacent blades of a blade wheel.

In the above structures, a heater is disposed inside the blade wheel.

According to the construction described above, the air blown up by the rotations of the blade wheel will transmit through the sheet member or the hollow yarn bundle being rotated together with the blade wheel, subsequently the transmitted air is discharged from an outlet of blower casing. At this time when the blown-up air transmits through the sheet member or the hollow yarn bundle, various treatments shall be performed in accordance with the function imparted to the sheet member or the hollow yarn bundle. Namely, the blown-up air is dehumidified, and/or the polar substance and organic substance are adsorbed or decomposed, whereby dehumidifying or deodorizing treatment or the like for the air are performed.

In this regard, since the sheet member or the hollow yarn bundle is rotated together with the blade wheel as described above, the blown up air can transmit through an entire part of the sheet member or the hollow yarn bundle in an extremely uniform condition. Therefore, a pressure loss due to the transmission of the blown up air through the sheet member or the hollow yarn bundle hardly occur.

Thereafter, the sheet member or the hollow yarn bundle is heated by a heater, and regenerated or refreshed.

### BRIEF DESCRIPTION OF THE DRAWINGS

The present invention will become more apparent and more easily be understood from the following detailed description when taken in conjunction with the accompanying drawings in which preferred embodiments of the present invention are shown by way of illustrative examples.

Note, the embodiments shown in the accompanying drawings are not for specifying or limiting the scope of this invention, but for merely making the explanation and understanding of this invention more easily.

In the accompanying drawings:
FIG. 1 is a cross sectional view showing a blower of a first embodiment according to the present invention.
FIG. 2 is a cross sectional view showing a blower of a first comparative example with respect to the present invention.
FIG. 3 is a cross sectional view showing a blower of a second comparative example with respect to the present invention.
FIG. 4 is a cross sectional view showing a blower of a third comparative example with respect to the present invention.
FIG. 5 is a diagram showing a blow capacity of the respective blower according to embodiments and comparative examples.
FIG. 6 is a cross sectional view showing a blower of a second embodiment according to the present invention.
FIG. 7 is a cross sectional view showing a blower of a third embodiment according to the present invention.
FIG. 8 is a perspective view showing a construction of a heater to be used in the respective embodiment.

### BEST MODE FOR EMBODYING THE INVENTION

The preferred embodiment of the blower according to the present invention will now be described hereunder with reference to the accompanying drawings.

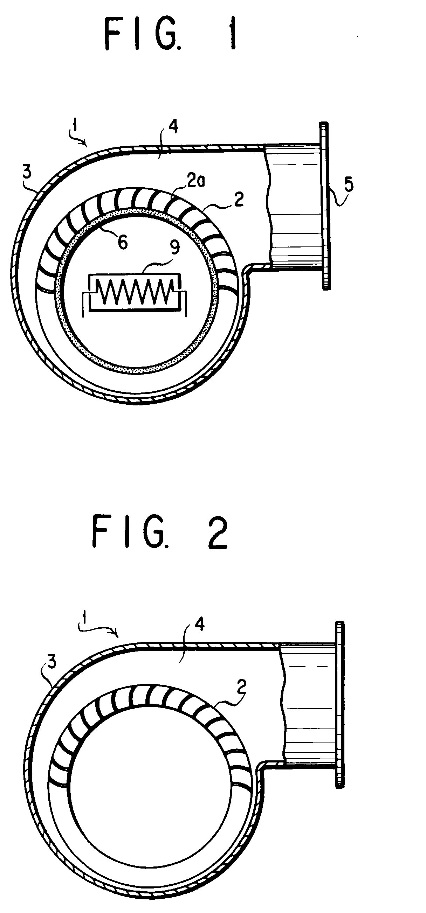

FIG. 1 shows a cross sectional view of a blower according to the first embodiment of this invention. In the drawing, reference numeral 1 denotes a multi-blade type blower comprising a scirocco fan 2 and a casing 3. When the scirocco fan 2 rotates in a clockwise direction in FIG. 1, the air introduced from a central portion of a scroll chamber 4 of the casing 3 is discharged from an outlet 5. This construction is the same as that of an ordinal multi-blade type blower. The scirocco fan 2 is constructed so as to have a plurality of blades 2a.

At an inner peripheral side of the scirocco fan 2, there is provided a cylindrical sheet member 6 having a gas-transmitting property so that an outer peripheral side of the sheet member is abutted and attached to inner side end portions of the blades 2a of the scirocco fan 2, whereby the respective interval space between the adjacent blades 2a is closed by the sheet member 6.

The sheet member 6 described above is constructed so as to comprise: a sheet body which is formed by bundling at least one fiber selected from inorganic fibers and metal fibers such as activated carbon fiber, glass fiber, alumina fiber, silica-alumina fiber, aluminum fiber, copper fiber, iron fiber, nickel fiber, stainless steel fiber, nichrome fiber, kanthal fiber or the like in a form of a woven fabric or non-woven fabric cloth; and a moisture absorbent; and/or an adsorbent for adsorbing polar substances and organic substances; and/or oxidizing/decomposing agent for oxidising or decomposing the polar substances and organic substances, the agents being reaction-produced on a surface of the sheet body.

As the examples of the moisture absorbent, silica gel, silica-alumina gel, alumina gel or the like is preferably used. Further, as the examples of the adsorbent, activated carbon for deodorizing, porous glass fiber for deodorizing and dehumidifying or the like is preferably used. In addition, as the examples of the oxidizing/decomposing agent, copper, nickel, iron, chrome platinum, palladium, rhodium or the like is preferably used.

In the construction described above, when the scirocco fan 2 is rotated, the air introduced from a center portion of the scirocco fan 2 is blown up to a outer peripheral side of the scirocco fan 2, then discharged from the outlet 5. When the air is blown up to the outer peripheral side of the scirocco fan 2, the blown-up air passes through the sheet member 6. At this time when the blown-up air transmits through the sheet member 6, the blown-up air is dehumidified and/or the polar substance and organic substance contained in the air are adsorbed or decomposed, whereby dehumidifying and/or deodorizing treatment or the like are performed.

In this regard, since the sheet member 6 is rotated together with the scirocco fan 2 as described above, the blown-up air can transmit through an entire part of the sheet member 6 in an extremely uniform condition. As the result, the pressure loss due to the transmission of the blown-up air through the sheet member 6 hardly occur.

In order to evaluate performances of the blower shown in FIG. 1 according to the embodiment of this invention, three blowers respectively shown in FIGs. 2, 3 and 4 according to first to third comparative examples were prepared, and comparative experiments were conducted. Note, the size of scirocco fan 2 and the number of rotations of the blade wheel used in respective blowers shown in FIGs. 1 to 4 were set to be equal to each other. Further, the sheet members 6 having the same characteristics and specifications were used to the corresponding blower.

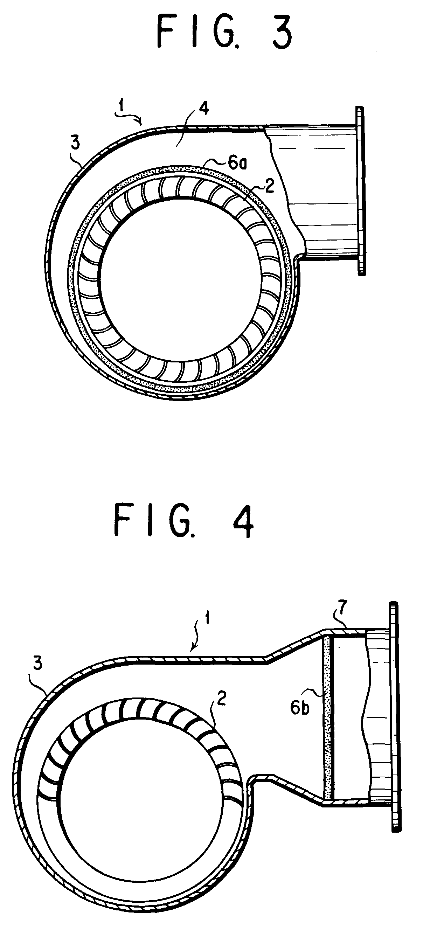

FIG. 2 shows a blower to which a sheet member 6 was not attached. FIG. 3 shows a blower in which a cylindrically-formed sheet member 6a was attached on an inner surface of the casing 3 so that the sheet member 6a faces to an outer circumferential portion of the scirocco fan 2. FIG. 4 shows a blower in which a sheet member 6b is interposed in a blow duct 7 of the blower.

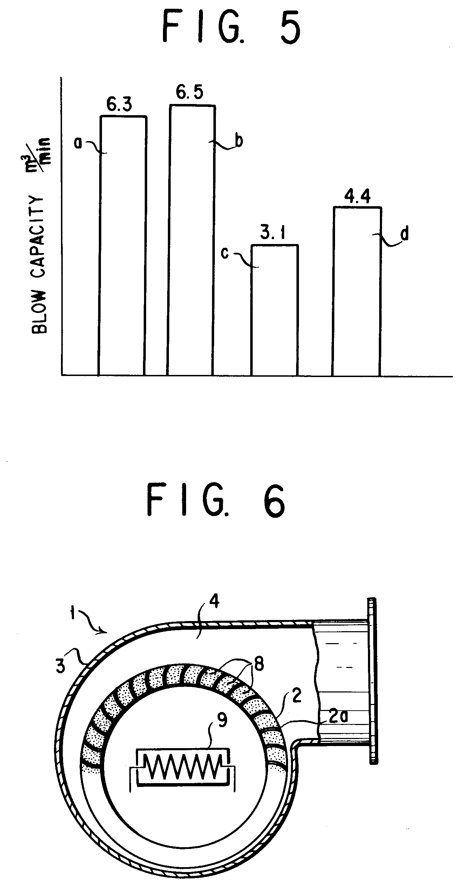

Blow capacities of the blowers respectively shown in FIGs. 1-4 were measured under a condition of that the blowers were driven at the same rotating speeds. The measured results are shown in FIG. 5, wherein a reference symbol a denotes the blow capacity of the blower shown in FIG. 1 according to the first embodiment of this invention, while the reference symbols b, c and d respectively denote the blow capacities of the blowers shown in FIGs. 2-4 according to the first to third comparative examples.

As is clear from the results shown in FIG. 5, as a matter of course, it was confirmed that the blower without using a sheet member 6 according to the first comparative example shown in FIG. 2 had the largest blow capacity. However, the blower according to the first embodiment of this invention shown in FIG. 1 could have almost the same blow capacity as that of the blower having no sheet member 6.

On the other hand, since the blowers shown in FIG. 3 and 4 are constructed so that the sheet members 6a and 6b are interposed on the route of the blow paths of the blowers, the pressure loss due to the location of the sheet member would be greatly increased. Therefore, the blow capacities of the blowers were disadvantageously lowered in comparison with those of the first embodiment and the first comparative example.

By the way, though it is not shown as an embodiment, even in a case where the cylindrically-formed sheet member 6 was fixed onto an outer circumference of the scirocco fan 2 and was rotated together with the scirocco fan 2, there could be obtained almost the same results as in the case of the blower according to the first embodiment in which the sheet member was fixed onto an inner circumference of the scirocco fan 2. Furthermore, even in a case where the sheet member 6 is fixed onto both inner and outer circumferences of the scirocco fan 2, there was not caused any trouble in operating the blower.

The apparent surface areas of an aluminum non-woven fabric cloth used in above first embodiment as a sheet member 6 are shown in Table 1 listed below.

**Table 1**

| | |
|---|---|
| Width of Filament | 100 µ |
| Thickness of Filament | 20 µ |
| Specific Gravity of Aluminum | 2.7 g/cm³ |
| Specific Gravity of Aluminum Nonwoven Fabric | 0.16 g/cm³ |
| Surface Area of Aluminum Nonwoven Fabric | 71 cm²/cm³ |

In addition, the pressure loss of the aluminum nonwoven fabric cloth was 550 mm-aq·cm² ·min/cm·m³.

The aluminum nonwoven fabric described above is formed in accordance with a method comprising the steps of: mixing 15 g of 50%-concentrated sulfuric acid (conc-H₂SO₄) solution into 50% third grade sodium silicate solution to prepare a mixture, and forcibly agitating the mixture to prepare an uniform mixed solution; dipping a aluminum sheet into the mixed solution; and removing an excess amount of the mixed solution.

FIG. 6 shows a blower according to the second embodiment of this invention. This second embodiment is constructed by packing hollow yarn bundles 8 into the respective interval space between adjacent blades 2a of the scirocco fan 2 provided in the blower 1, the hollow yarn bundle 8 being composed of inorganic fibers to which a hygroscopicity (dehumidifying property)-imparting treatment is subjected. The each hollow yarn constituting the hollow yarn bundle has a length of 40 mm. The end portions ranging 5 mm from both ends of the hollow yarn is braided so as to have a hollow shape, while the residual intermediate portion ranging 30 mm is formed in a filament shape.

The specification and construction of the hollow yarn are as follows:
Material: silica-alumina long fiber (R960D-G2, mfd. by Nichibi Co., Ltd.)
Number of yarns constituting the hollow yarn: 32
Number of filaments constituting the yarn: 960
Filament diameter: 7 µm
Outer/Inner Diameters of the end portion of the hollow yarn: 3.0/2.6 mm
Surface Area of the hollow yarn filament per unit volume: 962 cm²/cc

When a runner having a diameter of 13 cm, width of 4 cm and filament portion having thickness of 3 cm is used, the surface area of the filament reaches to 471000 cm², thus providing, as a result, a large apparent surface area.

When the air was treated by using the blower according to the second embodiment and performances were measured, the following results shown in Table 2 were obtained.

**Table 2**

| Item | Result |
|---|---|
| Air Quantity (Capacity) | 3 m³/min |
| Temperature of Air to be treated | 25 °C |
| Humidity of Air to be treated | 65 % |
| Temperature of treated Air | 45 °C |
| Humidity of treated Air | 5 % |

In the blowers according to first and second embodiments, a heater 9 is provided at an inside of the respective scirocco fan 2. The heater 9 is electrically connected to a power source so as to intermittently make a heated state in the circumference of the scirocco fan.

The heater 9 is used for regenerating the hollow yarn bundle 8. Namely, after the hollow yarn bundle 8 have absorbed moisture components and/or adsorbed organic substance or polar substance during a predetermined term of operation of the blower, the hollow yarn bundle 8 is regenerated by being heated for a predetermined period of time.

As a matter of course, the heater 9 is also applicable to the regeneration of the sheet member 6 used in the blower of the first embodiment.

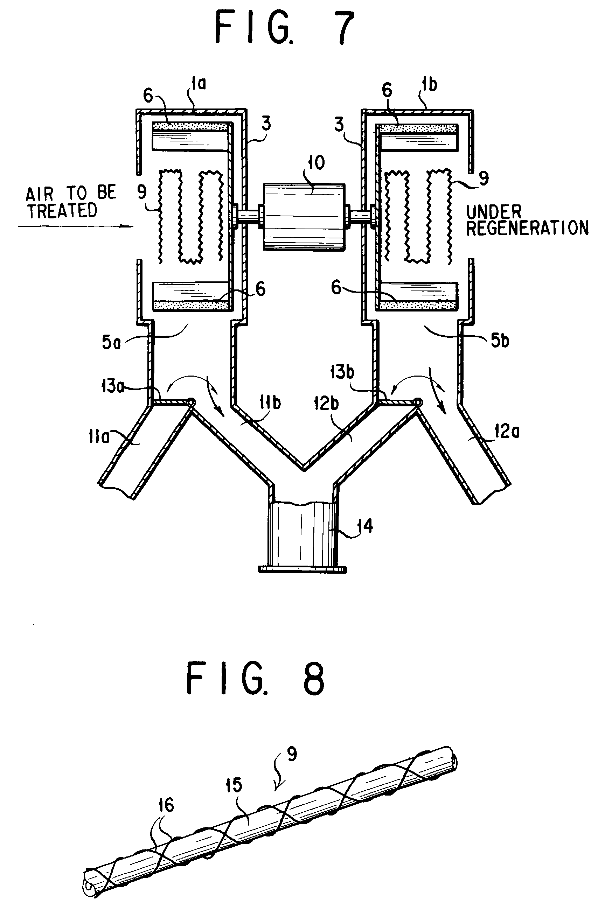

FIG. 7 shows a blower according to the third embodiment of this invention. This third embodiment is constructed by arranging two blowers 1a and 1b, wherein each of the blowers 1a and 1b is alternatively operated in such a manner that one blower introduces and treats the air, while the other blower performs the regeneration by heating.

The both of the blowers 1a and 1b are rotatably connected to each other by a common one rotating shaft which is driven by a common motor 10. At the outlets 5a and 5b of the respective blowers 1a and 1b are provided with wet-air tubes 11a, 12a and dry-air tubes 11b, 12b. The wet-air tubes 11a, 12a and dry-air tubes 11b, 12b of the respective blowers 1a and 1b are constructed so as to enable to alternatively switch the blow path by means of open-close valves 13a and 13b. Further, the dry-air tubes 11b and 12b of the respective blowers 1a and 1b are integrally connected to one dry-air duct 14.

In addition, at an outer circumference portion of the scirocco fan 2 provided in the respective blowers 1a and 1b, there is fixed a sheet member 6 composed of aluminum fibers to which a hygroscopicity (dehumidifying property)-imparting treatment is subjected. Further, a heater 9 is provided at inside of the scirocco fan 2 provided in respective blowers 1a and 1b, and the heater 9 is supported by a support member (not shown).

The thus constructed blower is operated as follows. Namely, by controlling both open-close valves 13a and 13b, the dry-air tube 11b of one blower 1a is switched to open, and the wet-air tube 11a of one blower 1a is switched to close, while the dry-air tube 12b of the other blower 1b is switched to close, and the wet-air tube 12a of the other blower 1b is switched to open. Then, the heater 9, provided in the blower 1b whose dry-air tube is switched to close, is operated to a heating mode.

Due to the above operation, when the air introduced into the blower 1a, whose heater 9 is not in heating mode, transmits through the sheet member 6, the air is dehumidified and converted into dry air, and the dry air is then blown up through the dry air tube 11b to the dry air duct 14.

On the other hand, the air introduced into the blower 1b whose heater 9 is in heating mode is heated by the heater 9, and thereafter, transmits through the sheet member 6. Subsequently, the air is blown up through the wet-air tube 12a, and then, discharged again into atmosphere. During this operation, the sheet member 6 of this blower 1b is heated and regenerated.

By alternatively repeating these operations, the air subjected to a dehumidifying treatment or the like can be continuously obtained from the dry air duct 14, while the sheet members 6 provided in both blowers 1a and 1b are alternatively regenerated.

In the third embodiment, when the sheet member 6 which is formed by subjecting a silica-gelation treatment of sodium silicate onto a surface of an aluminum nonwoven fabric cloth was used, the following results of the air treatment could be obtained as shown in Table 3 listed below.

**Table 3**

| Item | Result |
|---|---|
| Air Quantity (Capacity) | 5 m³/min |
| Temperature of Air to be treated | 25 °C |
| Humidity of Air to be treated | 70 % |
| Temperature of treated Air | 46 °C |
| Humidity of treated Air | 15 % |

The materials constituting the heater 9 are as follows:
Inorganic Fiber: alumina fiber (R960D-G2, mfd. by Nichibi Co.,Ltd)
Number of Inorganic Fibers: 8
Metal Fiber: nichrome wire having a diameter of 0.3 mm (NCHW, mfd. by Tokyo Resistance Wire Co.,Ltd)
Number of Metal Fibers: 4

Further, the performances of thus constructed heater 9 are shown hereunder.
Value of Resistance: 20 Ω/m
Heater Diameter: 2.3 mm
Access Time from normal temperature to 700°C: 4 sec.
Access Time from 700°C to normal temperature: 30 sec.

Next, an example of a deodorizing experiment will be explained hereunder.

As in the same manner as in the sheet member 6 of the third embodiment, an aluminum nonwoven fabric was subjected to the silica-gelation treatment, and then, dipped into a liquid mixture of cuprous oxide-ascorbic acid, subsequently dried. The resultant aluminum nonwoven fabric was attached to an inner (or outer) peripheral portion of the scirocco fan 2. Thereafter, a sensory test was conducted for evaluating a deodorizing function of the blower with respect to mercaptan.

As the results, the air treated by the scirocco fan was confirmed to have no odor at all.

In the respective embodiments described above, as a heater 9 to be provided at the inner peripheral portion of the scirocco fan 2, there can be used a heater 9 as shown in FIG. 8, which is formed by winding a plurality of thin metal wires 16 around a hollow yarn 15 composed of inorganic fibers.

The winding method of the metal wires is performed in such a manner that each of the metal wire 16 is wound up around the hollow yarn alternatively in upward and downward. This heater is flexible.

According to the present invention, there can be provided a blower which is capable of obtaining a sufficient blowing capacity equal or more of that of an ordinal multi-blade type blower, reducing the pressure loss in comparison with that of the conventional blower having the interposition such as dust removing filter or the like interposed within the blowing path, being compactly constructed in scale, and having an excellent function of dehumidifying or deodorizing the blow gas.

Though the present invention has been described with reference to the exemplified embodiments, it will be apparent to those skilled in the art that various modifications, changes, omissions, additions and other variations can be made in the disclosed embodiments of this invention without departing from the scope or spirit of the present invention. Accordingly, it should be understood that the present invention is not limited to the described embodiments, and shall include the scope specified by the elements appended claims and range of equivalency of the claims.

## Claims

1. A blower of multi-blade structure having a plurality of blades characterized in that a sheet-shaped member composed of a fiber material and imparted with at least one of dehumidifying, absorbing and oxidizing/decomposing functions is secured to at least one side of inner peripheral side and outer peripheral side of a blade wheel so as to close a respective interval space between adjacent blades of the blade wheel.

2. A blower according to claim 1, wherein the sheet-shaped member is formed of at least one fiber selected from inorganic fibers and metal fibers such as activated carbon fiber, glass fiber, alumina fiber, silica-alumina fiber, aluminium fiber, copper fiber, iron fiber, nickel fiber, stainless steel fiber, nichrome fiber, or kanthal fiber, or combination thereof so as to provide a sheet-shaped body having s surface on which a moisture absorbent such as silica gel, silica-alumina gel, or alumina gel is reaction-produced.

3. A blower according to claim 2, wherein the surface of the sheet-shaped member is treated with oxidizing/decomposing agent such as copper, nickel, iron, chrome, platinum, palladium, or rhodium for further imparting a function for oxidizing/decomposing a polar substance and an organic substance.

4. A blower of multi-blade structure having a plurality of blades characterized in that a bundle of hollow yarns each composed of inorganic fibers, to which at least one of dehumidifying, absorbing and oxidizing/decomposing functions is imparted, is packed in a respective interval space between adjacent blades of a blade wheel.

5. A blower according to any one of claims 1, 2, 3 and 4, wherein a heater is disposed inside the blade wheel.
